(19) Europäisches Patentamt
European Patent Office
Office européen des brevets

(11) EP 2 670 885 B1

(12) EUROPEAN PATENT SPECIFICATION

(45) Date of publication and mention
of the grant of the patent:
**18.04.2018 Bulletin 2018/16**

(51) Int Cl.:
*C23C 18/12* (2006.01)          *H01J 1/70* (2006.01)
*H05B 33/26* (2006.01)          *C09D 5/24* (2006.01)

(21) Application number: **12708182.6**

(22) Date of filing: **02.02.2012**

(86) International application number:
**PCT/US2012/023660**

(87) International publication number:
**WO 2012/106532 (09.08.2012 Gazette 2012/32)**

(54) **SOLUTION DERIVED NANOCOMPOSITE PRECURSOR SOLUTIONS**

AUS NANOKOMPOSITVORLÄUFERLÖSUNGEN GEWONNENE LÖSUNG

SOLUTIONS DE PRÉCURSEURS DE NANOCOMPOSITES ISSUS D'UNE SOLUTION

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **02.02.2011 US 201161438862 P**

(43) Date of publication of application:
**11.12.2013 Bulletin 2013/50**

(73) Proprietor: **Advenira Enterprises, Inc**
**Sunnyvale, CA 94085 (US)**

(72) Inventor: **RYABOVA, Elmira**
**Mountainview CA 94040 (US)**

(74) Representative: **HGF Limited**
**Saviour House**
**9 St. Saviourgate**
**York YO1 8NQ (GB)**

(56) References cited:
**US-A1- 2004 247 899     US-B1- 6 403 161**

• **MENG-YUEH LIU ET AL: "Effect of solvent on morphological properties of TiOx thin film", PROCEEDINGS OF SPIE, vol. 7396, 20 August 2009 (2009-08-20), pages 73960U-73960U-7, XP055068715, ISSN: 0277-786X, DOI: 10.1117/12.825421**

• **KOODALI T RANJIT ET AL: "A review of the chemical manipulation of nanomaterials using solvents: Gelation dependent structures", JOURNAL OF SOL-GEL SCIENCE AND TECHNOLOGY, KLUWER ACADEMIC PUBLISHERS, BO, vol. 40, no. 2-3, 27 June 2006 (2006-06-27), pages 335-339, XP019436270, ISSN: 1573-4846, DOI: 10.1007/S10971-006-8369-8**

• **WOLF C ET AL: "SOL-GEL FORMATION OF ZIRCONIA: PREPARATION, STRUCTURE AND RHEOLOGY OF SOLS", JOURNAL OF MATERIALS SCIENCE, KLUWER ACADEMIC PUBLISHERS, vol. 27, no. 14, 15 July 1992 (1992-07-15), pages 3749-3755, XP000292656, ISSN: 0022-2461, DOI: 10.1007/BF00545451**

• **T. W. ZERDA ET AL: "Effect of solvents on the hydrolysis reaction of tetramethyl orthosilicate", CHEMISTRY OF MATERIALS, vol. 2, no. 4, July 1990 (1990-07), pages 372-376, XP055068713, ISSN: 0897-4756, DOI: 10.1021/cm00010a012**

• **SRINIVASA R. RAGHAVAN ET AL: "Rheology of Silica Dispersions in Organic Liquids: New Evidence for Solvation Forces Dictated by Hydrogen Bonding", LANGMUIR, vol. 16, no. 21, October 2000 (2000-10), pages 7920-7930, XP055068716, ISSN: 0743-7463, DOI: 10.1021/la991548q**

• **YOUNG SIL LEE ET AL: "Dynamic properties of shear thickening colloidal suspensions", RHEOLOGICA ACTA, vol. 42, no. 3, May 2003 (2003-05), pages 199-208, XP055068719, DOI: 10.1007/s00397-002-0290-7**

- MOVCHAN T G ET AL: "Kinetics of structuring in the sol-gel systems based on tetraethoxysilane with organic additives: I. Sols", GLASS PHYSICS AND CHEMISTRY, KLUWER ACADEMIC PUBLISHERS-PLENUM PUBLISHERS, NE, vol. 31, no. 2, March 2005 (2005-03), pages 219-228, XP019296376, ISSN: 1608-313X

- WENGUI WENG ET AL: "Control of Gel Morphology and Properties of a Class of Metallo-Supramolecular Polymers by Good/Poor Solvent Environments", MACROMOLECULES, vol. 42, no. 1, 12 April 2008 (2008-04-12) , pages 236-246, XP055068720, ISSN: 0024-9297, DOI: 10.1021/ma801046w

**Description**

**Technical Field**

Solution derived nanocomposite (SDN) precursor solutions are disclosed that comprise one or more, preferably two or more, metal precursors that are dissolved in a liquid comprising polar protic and polar aprotic solvents. The precursor solutions are characterized by the formation of a gel after a shear force is applied to the precursor solution or to a thin layer of precursor solution. Also disclosed are methods using such precursor solutions to make thin films, thin films made using the precursor solutions, thin films having a minimum surface area and devices containing thin films as disclosed herein.

**Background of the Invention**

Thin film coatings or layers of multilayer film stacks are found in many devices. For example, binary and ternary metal-nonmetal compounds, including but not limited to $Y_2O_3$, $ZrO_2$, YZO, $HfO_2$, YHO, $Al_2O_3$, $AlO_2$, ZnO, AZO, ITO, SiC, $Si_3N_4$, SixCyNz, SixOyNz, $TiO_2$, CdS, ZnS, $Zn_2SnO_4$, $SiO_2$, $WO_3$, $CeO_3$ and so on, have been deposited as thin film coatings or layers of multilayer film stacks for various purposes. Such thin films include transparent conductive oxide (TCO) electrodes, passivating films, back surface field (BSF) layers, diffusion barriers, up-converters, down-converters, selective emitter masks, ion storage layers such as found in lithium ion batteries or electrochromic devices, solid electrolytes, moisture barriers, abrasion resistance layers, thermal barriers, impedance correction layers, surface modification layers, dielectric thin films, reflective and antireflective layers and the like.

There are a number of known methods for depositing such thin films. These methods can be divided into two categories: vacuum techniques such as PVD, CVD, ALD and MBE and non-vacuum techniques such as electroplating, CBD and screen printing. All of these approaches are expensive and time consuming.

Sol-gel processes have been used to make thin films. Sol-gel thin films can be made using a sol-gel medium containing a colloidal suspension of particles or a sol-gel solution. Processes using sol-gel solutions generally involve applying a thin film of a sol-gel precursor solution that contains metal precursors such as metal salts in combination with metal alkoxides. In some applications, the thin film is annealed at temperatures from 200° C to 900° C. See e.g. US 2004/0058066 and US 2007/0190361.

Hybrid sol-gel thin films have also been made. Such thin films contain inorganic and organic components and can be divided into two classes: (1) those that contain organic molecules, prepolymers or polymers embedded in an inorganic matrix and (2) those that contain inorganic and organic components that are connected by covalent bonds. Such hybrid sol-gels can be made by UV induced polymerization or as a product of the specific reaction. Additional curing, if necessary, is generally performed at between about 20° C and 200° C.

Solution sol-gel processes generally involve dip, spin or spray coating and are therefore limited in the surface area of the substrate that can be coated with the thin film. Examples include optical lenses and biomedical devices such as implants and vascular stents. The maximum surface area that can be covered by such techniques is typically less than about 50 $cm^2$. General purpose roll coaters have not been used successfully because of the difficulties in forming and maintaining a dynamic wetting line using non-Newtonian fluids.

The patent publication US6403161 discloses a process comprising preparing a coating solution containing zirconium oxide and a mixture of propanediol, triethanolamine and water in a weight ratio of 60:10:30.

Precursor solutions comprising tetramethyl orthosilicate (TMOS), water, methanol and a co-solvent such as acetone, acetonitrile or formamide, in a molar ratio of TMOS/water/solvents= 1:10:5.5 are known from T. W. Zerda and G. Hoang (Effect of solvents on the hydrolysis reaction of tetramethyl orthosilicate, Chemistry of Materials 1990 2 (4), 372-376).

**Summary of the Invention**

According to the invention, a precursor solution comprises:a first one of a sol-gel metal precursor or a sol-gel metalloid precursor;a polar protic solvent, wherein the polar protic solvent is an organic acid; and an alkyl amine polar aprotic solvent, wherein said precursor solution forms a gel after a shear force is applied to said precursor solution, wherein relative amounts of said polar protic solvent and said polar aprotic solvent are selected to control gel formation in said precursor solution, and wherein said polar aprotic solvent is present in said precursor solution at between 1 and 25 vol%.

The metal in the sol-gel metal precursors can be one or more of the transition metals, the lanthanides, the actinides, the alkaline earth metals and Group IIIA through Group VA metals or combinations thereof with another metal or metalloid.

The metalloid in the sol-gel metalloid precursors can be one or more of boron, silicon, germanium, arsenic, antimony, tellurium, bismuth and polonium or combinations thereof with another metalloid or metal.

The sol-gel metal precursors can be metallic compounds selected from organometallic compounds, metallic organic salts and metallic inorganic salts. The sol-gel metalloid precursors can be metalloid compounds selected from organometalloid compounds, metalloid organic salts and metalloid inorganic salts. When more than one metal or metalloid is used it is preferred that one be an organic compound such as an alkoxide and the other an organic or inorganic salt.

The polar protic solvent used in the precursor solution according to the invention is preferably an organic acid. Other polar protic solvents not according to the invention include an alcohol, for example a lower alkyl alcohol such as methanol and ethanol. Water may also be present in the solution.

The polar aprotic solvent according to the invention is an aprotic alkyl amine. Polar aprotic solvents not according to the invention include a halogenated alkane, alkyl ether, alkyl ester, ketone, aldehyde, alkyl amide, alkyl nitrile or alkyl sulfoxide. Polar solvents not according to the invention include methyl amine, ethyl amine and dimethyl formamide.

In one embodiment, the metal and/or metalloid precursor is dissolved in the polar protic solvent. The polar aprotic solvent is then added while the solution is stirred under conditions that avoid non-laminar flow. Acid or base, which is used as a catalyst for polymerization of the metal and/or metalloid precursors, can be added before or after the addition of the polar aprotic solvent. Preferably, the acid or base is added drop wise in a one step process while stirring.

If too much polar aprotic solvent is added gelation can occur. Accordingly, the amount of polar aprotic solvent can be determined empirically for each application. The amount of polar aprotic solvent needs to be below the amount that causes gelation during mixing but be sufficient to cause gelation of the precursor solution after a shear force is applied to the precursor solution, e.g. during application to a surface, or when a shear force is applied to a thin film of the precursor solution that has been deposited on the surface of a substrate, e.g. by application of a doctor blade to the precursor solution thin film.

In another embodiment, processes are disclosed for making a solid thin film layer. The process includes applying precursor solution to one or more surfaces of a substrate where the precursor solution contains (1) one or more sol-gel metal precursors and/or sol-gel metalloid precursors, (2) a polar protic solvent and (3) a polar aprotic solvent. Preferably, the application of the precursor provides sufficient shear force to cause gelation of the precursor solution to form a gelled thin layer. Alternatively, a shear force can be applied to a thin film of precursor solution deposited on a substrate.

In further embodiments of the disclosed processes, the gelled thin layer is exposed to UV, visible and/or infrared radiation. The irradiation causes further chemical reaction of the sol-gel precursors to form the thin gel. It also results in the formation of a solid thin film.

In other embodiments, additional organic components are present in the precursor solution. Upon exposure of the gelled thin film to radiation, preferably UV radiation, such components are polymerized to form a hybrid (inorganic/organic) sol-gel thin film. Such hybrid sol-gel thin films are desirable as they are less likely to form cracks and other defects upon thin film formation.

In other embodiments, the irradiation causes the temperature of the gel and/or thin film to increase to a temperature that allows the formation of a desirable microstructure in the thin film.

The application of the precursor solution can be by dip coating and/or spin coating or by roll coating. Each of these methods can provide sufficient shear force to cause gelation of the precursor solution.

Thin films made by the disclosed processes and multilayer films comprising one or more of such thin films are also disclosed. In some embodiments, such thin films are characterized by the surface area which is coated using the disclosed sol-gel precursor solutions. In particular, the sol-gel precursor solutions are readily adaptable for roll coater applications which allow the production of thin films with an area of up to about 20-100 $m^2$.

Devices comprising the disclosed thin films or multilayer film stacks containing one or more of such thin films are also disclosed.

**Brief Description of the Drawings**

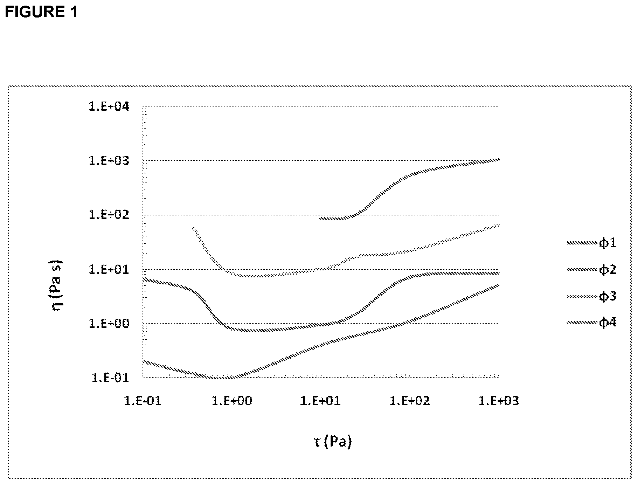

Figure 1 shows the relationship of dynamic viscosity as a function of shear force for a typical sol-gel precursor solution.

**Detailed Description**

Most prior art solutions used to make sol-gel thin films contain sol-gel precursors, a primary solvent such as a lower alcohol (e.g. methanol or ethanol) and an acid or base catalyst. Additional components may also be present. When applied as a thin film such solutions form a gel after the passage of time (e.g. about 5 seconds to 500 seconds) and a thin film after additional drying. Gel formation can be facilitated by increasing the pH and/or density of the solution, by raising the ambient temperature or by exposing the thin film layer to radiation.

The "sol-gel precursor solutions" (sometimes referred to as "SDN precursor solutions" or "precursor solutions") disclosed herein are different in that gelation is determined by the properties of the mixed solvent used to make the sol-gel precursor solution. Rather than use a single solvent, the solvent used is a mixture of (1) a polar protic solvent and (2) a polar aprotic solvent. By controlling the relative amounts of the protic and aprotic polar solvents and the amount of sol-gel precursors in solution (and other components that may be present) gel formation in the precursor solution can be controlled so that it occurs shortly after application on the surface of a substrate as a thin wet solution. The means of application of the precursor solution causes a sufficient shear force to cause gel formation. Gel formation can occur at ambient temperatures without the application of heat or radiation.

The sol-gel metal and/or metalloid precursors in the solution are chosen so that the formation of sol-gel polymers is thermodynamically favored. Without being bound by theory, it is believed that the mixture of polar protic and polar aprotic solvents results in a mixed solvent having an altered polarity (as compared to single solvent systems) that effectively lowers the activation energy for polymer formation by the metal and/or metalloid precursors. If too much polar aprotic solvent is used, the sol-gel precursor solution becomes unstable and can form a gel during its mixing or prior to its application as a solution as a thin film solution. This is undesirable and can result in the clogging of the equipment used for applying the precursor solution. It may also interfere with the formation of a uniform thin layer of precursor solution on the surface of the substrate. The gel formed from such a non-uniform layer will also be non-uniform and will likely contain undesirable defects. If too little polar aprotic solvent is used, the applied precursor solution will not gel in a time efficient manner on the substrate surface.

Accordingly, the formulation of the sol-gel precursor compositions may require semi-empirically determining the relative amounts of the metal and/or metalloid precursors and the protic polar and aprotic polar solvents used. When performing such tests, it is preferred that an acid or base catalyst be present in the amount anticipated for the eventual use of the sol-gel precursor. The catalyst facilitates polymerization of the precursors in the presence of the mixed solvent. Such determinations take into account the amount of shear force to be applied during the application of the precursor solution. In general such shear forces are from about 1N to about 1000N more typically from about 1N to about 100N and usually about 1 N to about 10N for the average wet layer thickness. The thickness of such wet layer films can be from about 1 nm to about 1 mm, about 10 nm to about 100 micrometres, about 10 nm to about 1 micrometre, about 50 nm to about 1 micrometre, about 100 nm to about 100 micrometres and from about 1 micrometre to about 1 mm. Alternatively, for a particular precursor solution, the shear force needed for appropriate thin film gel formation can be determined and used during the application process.

The time for gel formation after application of the shear force to the sol-gel solution is preferably between about 1 second and 1000 seconds, about 1 second to 100 seconds, about 1 second to about 10 seconds, about 1 second to less than 5 seconds and about 1 second to about 4 seconds.

The SDN precursor solutions are typically Non-Newtonian dilatant solutions. As used herein, "dilatant" refers to a solution where the dynamic viscosity increases in a non linear manner as shear force is increased. The amount of shear force applied to the precursor solution and the dynamic viscosity for a typical precursor solution is set forth in Figure 1. In Figure 1, viscosity is defined as the ratio of shear stress to shear rate:

$$\eta = \tau/\gamma \ \text{(viscosity)}$$

The shearing force $\tau$ acting over the unit area is known as the shear stress:

$$\tau = F/A \ \text{(shear stress)}$$

The velocity gradient $dv/dx$ through the layer is constant, where $dv$ is the incremental change in velocity corresponding to a thickness, dx, of the liquid layer. This term is known as shear rate and is given by:

$$\gamma = dv/dx \ \text{(shear rate)}$$

In Figure 1, $\varphi1$, $\varphi2$, $\varphi3$, $\varphi4$ are four different ratios for metal/metalloid compounds and solvents in ascending order for a precursor used to make an anti-reflective coating.

As used herein, the term "gelled thin film", "thin film gel", "sol-gel thin film" or grammatical equivalents means a thin film where the metal and/metalloid sol-gel precursors in a precursor solution form polymers which are sufficiently large and/or cross linked to form a gel. Such gels typically contain most or all of the original mixed solution and have a thickness of about 1 nm to about 10,000 nm, more preferably about 1 nm to about 50,000 nm, more preferably about 1 nm to about 5,000 nm and typically about 1 nm to about 500 nm.

Gelled thin films and the precursor solutions used to make them can also contain polymerizable moieties such as organic monomers, and cross-linkable oligomers or polymers. Examples include the base catalyzed reaction between melamine or resorcinol and formaldehyde followed by acidization and thermal treatment.

In some cases one or more of the metal and/or metalloid precursors can contain cross-linkable monomers that are covalently attached to the metal or metalloid typically via an organic linker. Examples include diorganodichlorosilanes which react with sodium or sodium-potassium alloys in organic solvents to yield a mixture of linear and cyclic organosilanes.

When cross-linkable moieties are used, it is preferred that the precursor solution also contain a polymerization initiator. Examples of photo-inducible initiators include titanocenes, benzophenones/amines, thioxanthones/amines, bezoinethers, acylphosphine oxides, benzilketals, acetophenones, and alkylphenones. Heat inducible initiators which are well known to those in the art can also be used.

As used herein, the term "thin film", "sol-gel thin film" or grammatical equivalents means the thin film obtained after most or all of the solvent from a gelled thin film is removed. The solvent can be removed by simple evaporation at ambient temperature, evaporation by exposure to increased temperature of the application of UV, visible or IR radiation. Such conditions also favor continued polymerization of any unreacted or partially reacted metal and/or metalloid precursors. Preferably, 100 vol% of the solvent is removed although in some cases as much as 30 vol% can be retained in the thin gel. Single coat thin films typically have a thickness of between about 1 nm and about 10,000 nm, between about 1 nm and 1,000 nm and about 1 nm and 100 nm. When more than one coat of precursor composition is applied to form a thin film, the first layer can be allowed to gel and then converted to a thin film. A second coat of the same or a different precursor solution can then be applied and allowed to gel followed by its conversion to a thin film. In an alternate embodiment, the second coat of precursor composition can be applied to the gelled first layer. Thereafter the first and second gelled layers are converted to first and second thin films. Additional layers can be added in a manner similar to the above described approaches.

When one or more polymerization moieties are present, it is preferred that the thin file gel be exposed to an appropriate initiating condition to promote polymerization of the polymerizable moieties. For example, UV radiation can be used with the above identified photo-inducible initiators.

As used herein, a "hybrid thin film gel" or grammatical equivalents refers to a thin film gel that contains a polymerizable organic component.

As used herein, a "hybrid thin film" or grammatical equivalents refers to a thin film that contains an organic component that has been polymerized or partially polymerized.

The metal in said one or more sol-gel metal precursors is selected from the group consisting of transition metals, lanthanides, actinides, alkaline earth metals, and Group IIIA through Group VA metals. Particularly preferred metals include Al, Ti, Mo, Sn, Mn, Ni, Cr, Fe, Cu, Zn, Ga, Zr, Y, Cd, Li, Sm, Er, Hf, In, Ce, Ca and Mg.

The metalloid in said one or more sol-gel metalloid precursors is selected from boron, silicon, germanium, arsenic, antimony, tellurium, bismuth and polonium. Particularly preferred metalloids include B, Si, Ge, Sb, Te and Bi.

The sol-gel metal precursors are metal-containing compounds selected from the group consisting of organometallic compounds, metallic organic salts and metallic inorganic salts. The organometallic compound can be a metal alkoxide such as a methoxide, an ethoxide, a propoxide, a butoxide or a phenoxide.

The metallic organic salts can be, for example, formates, acetates or propionates.

The metallic inorganic salts can be halide salts, hydroxide salts, nitrate salts, phosphate salts and sulfate salts.

Metalloids can be similarly formulated.

**Solvents**

Solvents can be broadly classified into two categories: *polar* and *non-polar.* Generally, the dielectric constant of the solvent provides a rough measure of a solvent's polarity. The strong polarity of water is indicated, at 20° C, by a dielectric constant of 80. Solvents with a dielectric constant of less than 15 are generally considered to be nonpolar. Technically, the dielectric constant measures the solvent's ability to reduce the field strength of the electric field surrounding a charged particle immersed in it. This reduction is then compared to the field strength of the charged particle in a vacuum. The dielectric constant of a solvent or mixed solvent as disclosed herein can be thought of as its ability to reduce the solute's internal charge. This is the theoretical basis for the reduction in activation energy discussed above.

Solvents with a dielectric constant greater than 15 can be further divided into protic and aprotic. Protic solvents solvate anions strongly via hydrogen bonding. Water is a protic solvent. Aprotic solvents such as acetone or dichloromethane tend to have large dipole moments (separation of partial positive and partial negative charges within the same molecule) and solvate positively charged species via their negative dipole.

**Polar Protic Solvents**

Examples of the dielectric constant and dipole moment for some polar protic solvents are presented in Table 1.

**Table 1**

| | | | | | |
|---|---|---|---|---|---|
| **Polar protic solvents** | | | | | |
| **Solvent** | **Chemical formula** | **Boiling point** | **Dielectric constant** | **Density** | **Dipole moment** |
| Formic acid | $H-C(=O)OH$ | 101° C | 58 | 1.21 g/ml | 1.41 D |
| n-Butanol | $CH_3-CH_2-CH_2-CH_2-OH$ | 118° C | 18 | 0.810 g/ml | 1.63 D |
| Isopropanol (IPA) | $CH_3-CH(-OH)-CH_3$ | 82° C | 18 | 0.785 g/ml | 1.66 D |
| n-Propanol | $CH_3-CH_2-CH_2-OH$ | 97° C | 20 | 0.803 g/ml | 1.68 D |
| Ethanol | $CH_3-CH_2-OH$ | 79° C | 30 | 0.789 g/ml | 1.69 D |
| Methanol | $CH_3-OH$ | 65° C | 33 | 0.791 g/ml | 1.70 D |
| Acetic acid | $CH_3-C(=O)OH$ | 118° C | 6.2 | 1.049 g/ml | 1.74 D |
| Water | $H-O-H$ | 100° C | 80 | 1.000 g/ml | 1.85 D |

Preferred polar protic solvents have a dielectric constant between about 20 and 40. Preferred polar protic solvents have a dipole moment between about 1 and 3.

Polar protic solvents are selected from the group consisting of organic acids, preferably formic acid, acetic acid, propionic acid or butyric acid, most preferably acetic and/or propionic acids.

When an organic alcohol is used as a polar protic solvent not according to the invention, it can be a lower alkyl alcohol such as methyl alcohol, ethyl alcohol, propyl alcohol or butyl alcohol. **Polar Aprotic Solvents**

Examples of the dielectric constant and dipole moment for some polar aprotic solvents are set forth in Table 2.

**Table 2**

| | | | | | |
|---|---|---|---|---|---|
| **Polar aprotic Solvents** | | | | | |
| **Solvent** | **Chemical formula** | **Boiling point**http://en.wikipedia.org/wiki/Solvent - cite note -boil-6#cite note-boil-6 | **Dielectric constant** | **Density** | **Dipole moment** |
| Dichloromethane (DCM) | $CH_2Cl_2$ | 40° C | 9.1 | 1.3266 g/ml | 1.60 D |
| Tetrahydrofuran (THF) | /-$CH_2-CH_2-O-CH_2-CH_2-$\ | 66° C | 7.5 | 0.886 g/ml | 1.75 D |
| Ethyl acetate | $CH_3-C(=O)-O-CH_2-CH_3$ | 77° C | 6.02 | 0.894 g/ml | 1.78 D |
| Acetone | $CH_3-C(=O)-CH_3$ | 56° C | 21 | 0.786 g/ml | 2.88 D |
| Dimethylformamide (DMF) | $H-C(=O)N(CH_3)_2$ | 153° C | 38 | 0.944 g/ml | 3.82 D |
| Acetonitrile (MeCN) | $CH_3-C{\equiv}N$ | 82° C | 37.5 | 0.786 g/ml | 3.92 D |
| Dimethyl sulfoxide (DMSO) | $CH_3-S(=O)-CH_3$ | 189° C | 46.7 | 1.092 g/ml | 3.96 D |

Preferred polar aprotic solvents have a dielectric constant between about 5 and 50. Preferred polar aprotic solvents have a dipole moment between about 2 and 4.

The polar aprotic solvent according to the invention is selected from the group consisting aprotic alkyl amines. Alkyl amine polar aprotic solvents include diethylenetriamine and hexamethylenetetramine. Polar aprotic solvents not according to the invention include asymmetrical halogenated alkanes, alkyl ether, alkyl esters, ketones, aldehydes, alkyl amides, alkyl nitriles, alkyl sulfoxides or the following polar aprotic solvents.

Asymmetrical halogenated alkanes include dichloromethane, 1,2-dichloroethane, *1,2*-dichloropropane, *1,3*-dichloropropane, *2,2*-dichloropropane, dibromomethane, diiodomethane, bromoethane and the like.

Alkyl ether polar aprotic solvents include tetrahydrofuran, methyl cyanide and acetonitrile.

Ketone polar aprotic solvents include acetone, methyl isobutyl ketone, ethyl methyl ketone, and the like.

Alkyl amide polar aprotic solvents include dimethyl formamide, dimethyl phenylpropionamide, dimethyl chlorobenzamide and dimethyl bromobenzamide and the like.

A known alkyl nitrile aprotic solvent is acetonitrile.

A known alkyl sulfoxide polar aprotic solvent is dimethyl sulfoxide. Others include diethyl sulfoxide and butyl sulfoxide.

Another known aprotic polar solvent is hexamethylphosphoramide.

**Precursor Solutions**

The total amount of metal and/or metalloid precursors in the precursor solution is generally about 5 vol% to 40 vol% when the precursors are a liquid. However, the amount may be from about 5 vol% to about 25 vol% and preferably from about 5 vol% to 15 vol%.

The polar protic solvent makes up most of the mixed solvent in the precursor solution. It is present as measured for the entire volume of the precursor solution at from about 50 vol% to about 90 vol%, more preferably about 50 to about 80 vol% and most preferably about 50-70 vol%.

The polar aprotic solvent in the precursor solution is 1-25 vol % of the solution, more preferably 1-15 vol% and most preferably 1-5 vol%.

The application of the precursor solution can be by dip coating, spin coating or a combination of both. Alternatively, the application can be by roll coating or roll to roll coating when flexible substrates are used.

The use of the disclosed precursor solutions allows for the coating of the surfaces of three dimensional structures using dip coating to form a thin film enveloping the structure. This approach can be supplemented by spinning the coated three dimensional structure

Alternatively, a predetermined surface of a structure can be coated with the precursor solution using spin coating or roll coating. In some embodiments, multiple surfaces can be coated by using multiple roll coaters.

When a flat surface is coated, roll coating is the preferred method to apply the precursor solution. Roll coaters can also be used in roll to roll coating of flexible substrates. In either case, the coated surface has an area of at least $50 \text{ cm}^2$, at least $100 \text{ cm}^2$, at least $1,000 \text{ cm}^2$, at least $5,000 \text{ cm}^2$, at least $10,000 \text{ cm}^2$, at least $15,000 \text{ cm}^2$, at least $20,000 \text{ cm}^2$ and most preferably at least $25,000 \text{ cm}^2$. The upper limit of one dimension of the area coated is to the length of the roll in the roll coater. The length of a roll can be from about 5 or 10 centimeters to about 4 or 5 meters. Accordingly, one dimension of the thin film can also have a length within these ranges. The other dimension is limited by the length of the substrate which can be translated through the roll coater. In a roll to roll application, the second dimension is limited to the length of the flexible substrate. Accordingly, the use of sol-gel precursor solutions in roll coater applications allow the production of thin films with an area of up to about $20 \text{ m}^2$, $100 \text{ m}^2$ $500 \text{ m}^2$ and as much as $1,000 \text{ m}^2$ or more. Thus the area of the thin film can range from $50 \text{ cm}^2$ to $1,000 \text{ m}^2$.

If a single coat of precursor solution is applied, it is preferred that the thin film formed be from about 1 nm to about 500 nm thick, more preferably about 1 nm to about 250 nm think and most preferably about 1 nm to about 100 nm thick.

Other characteristics of the thin films formed useing sol-gel precursors relate to the internal stress in the thin layer and the defect concentration in the thin film. Whereas prior art thin films, such as those made by sputtering, have internal stresses in the range of GPa, thin films as disclosed herein have internal stresses in the range of KPa, e.g. 1000 Pa to less than about 1,000,000 Pa, However, the internal stress in the thin film may be in the MPa range as well. As for defect concentration, prior art thin films, such as those made by sputtering, have defect concentrations between 1.5-2%. Thin films made according to the disclosure herein typically have a defect concentration less than 0.001%, but may be as high as 0.01%, 0.1% or 1.0%. The range of defect concentration is therefore 0.001% or less to about 1.0%.

Preferred precursor solutions are as follows:

> Embodiment (1): The preferred precursor solution comprises one or more, preferably two or more, sol-gel metal precursors and/or sol-gel metalloid precursors, one or more polar protic solvents and one or more polar aprotic solvent, wherein the precursor solution forms a gel after a shear force is applied to said precursor solution.

Embodiment (2): The above preferred precursor solution wherein the viscosity of the solution increases with increasing shear force.

Embodiment (3): The above preferred precursor solution wherein the metal in the one or more sol-gel metal precursors is selected from the group consisting of transition metals, lanthanides, actinides, alkaline earth metals, and Group IIIA through Group VA metals, any subset of the group or any combination of members of the group or subset of the group.

Embodiment (4) The above preferred precursor solution wherein the metalloid in the one or more sol-gel metalloid precursors is selected from the group consisting of boron, silicon, germanium, arsenic, antimony, tellurium, bismuth and polonium, any subset of the group or any combination of members of the group or subset of the group.

Embodiment (5): The above preferred precursor solution wherein the one or more sol-gel metal precursors are metallic compounds selected from the group consisting of organometallic compounds, metallic organic salts and metallic inorganic salts, any subset of the group or any combination of members of the group or subset of the group. When one or more organometallic compounds are used, the preferred organmetallic compound is a metal alkoxide. In such cases the metal alkoxide is preferably selected from the group consisting of methoxides, ethoxides, propoxides, butoxides and phenoxides, any subset of the group or any combination of members of the group or subset of the group.
When metallic organic salts are used, the preferred precursor solution comprises a metallic organic salt preferably selected from the group consisting of formates, acetates and propionates, any subset of the group or any combination of members of the group or subset of the group.
When one or more metal inorganic salts are used, the metallic inorganic salt is preferably selected from the group consisting of halide, hydroxide, nitrate, phosphate and sulfate, any subset of the group or any combination of members of the group or subset of the group.

Embodiment (6): The above preferred precursor solution wherein the one or more polar protic solvents are selected from the group consisting of organic acids.
The organic acid is preferably selected from the group consisting of formic acid, acetic acid, propionic acid and butyric acid, any subset of the group or any combination of members of the group or subset of the group.
When, not according to the invention, one or more organic alcohols are used, the organic alcohol is preferably selected from the group consisting of methyl alcohol, ethyl alcohol, propyl alcohol and butyl alcohol, any subset of the group or any combination of members of the group or subset of the group

Embodiment (7): The above preferred precursor solution wherein the one or more polar aprotic solvents are selected from alkyl amines. In embodiments not according to the invention, the one or more polar aprotic solvents are selected from alkyl nitriles and alkyl sulfoxides, any subset of the group or any combination of members of the group or subset of the group. When, not according to the invention, one or more halogenated alkyl polar aprotic solvent is used, the halogenated alkyl polar aprotic solvent is preferably selected from the group consisting of dichloromethane, 1,2-dichloroethane, *1,2*-dichloropropane, *1,3*-dichloropropane, *2,2*-dichloropropane, dibromomethane, diiodomethane and bromoethane, any subset of the group or any combination of members of the group or subset of the group.
*When*, not according to the invention, *one or more alkyl ether polar aprotic solvents are used, the* alkyl ether polar aprotic solvent is preferably selected from the group consisting of tetrahydofuran, methyl cyanide and acetonitrile, any subset of the group or any combination of members of the group or subset of the group.
When, not according to the invention, one or more ketone polar aprotic solvents are used, the ketone polar aprotic solvent is preferably selected from the group consisting of acetone, methyl isobutyl *ketone and* ethyl methyl ketone, any subset of the group or any combination of members of the group or subset of the group.
When, not according to the invention, one or more alkyl amide polar aprotic solvents are used, the alkyl amide polar aprotic solvent is preferably selected from the group consisting of dimethyl formamide, dimethyl phenylpropionamide, dimethyl chlorobenzamide and dimethyl bromobenzamide, any subset of the group or any combination of members of the group or subset of the group.
When one or more alkyl amine polar aprotic solvents are used according to the invention, the alkyl amine polar aprotic solvent is preferably selected from the group consisting of diethylenetriamine and hexamethylenetetramine, or any combination of members of the group. When, not according to the invention, one or more alkyl nitrile aprotic solvents are used, at least one can comprise acetonitrile.
When, not according to the invention, one or more alkyl sulfoxide aprotic solvents are used, the alkyl sulfoxide aprotic solvent is preferably selected from the group consisting of dimethyl sulfoxide, diethyl sulfoxide and butyl sulfoxide, any subset of the group or any combination of members of the group or subset of the group.

Embodiment (8): The above preferred precursor solution wherein at least one of the metal or metalloid precursors is an organometallic or organometalloid compound comprising a polymerizable organic moiety.

Embodiment (9): The above preferred precursor solution further comprising a polymerizable organic monomer, organic oligomer or organic polymer.

Embodiment (10): The precursor solution of any of the preceding embodiments further comprising a photo-inducible polymerization catalyst. The photo-inducible polymerization catalyst is preferably selected from the group consisting of titanocenes, benzophenones/amines, thioxanthones/amines, bezoinethers, acylphosphine oxides, benzilketals, acetophenones, and alkylphenones, any subset of the group or any combination of members of the group or subset of the group.

Embodiment (11): The precursor solution of any of the preceding embodiments further comprising an acid or base catalyst.

**Process for Making Thin Films**

A process for making a solid thin film layer comprises the step of applying the precursor solution disclosed herein, including the above specific embodiments, to one or more surfaces of a substrate wherein the applying provides sufficient shear force to cause gelation of the precursor solution to form a gelled thin layer.

The process can further comprise exposing said gelled thin layer to UV, visible or infrared radiation. In such embodiments The radiation preferably causes formation of a solid thin film. This can occur due to an increase in the temperature of gelled thin layer so as to form a crystalline structure.

The application of the precursor solution can be by dip coating, spin coating or a combination of both. Roll coating or roll to roll coating can also be used.

**Thin Films and Devices Containing Thin Films**

Examples of thin films made according to the disclosure herein or as characterized herein include but are not limited to transparent conductive oxide (TCO) electrodes, passivating films, back surface field (BSF) layers, diffusion barriers up-converters, down-converters, selective emitter masks, ion storage layers such as found in lithium ion batteries or electrochromic devices, solid electrolytes, moisture barriers, abrasion resistance layers, thermal barriers, impedance correction layers, surface modification layers, dielectric thin films, reflective and antireflective layers and the like.

The devices which can contain the thin film include but are not limited to solar cells, especially large area solar cells, electrochromic glass, low emission glass and ultra thin glass.

**Example 1 (reference example not according to the invention)**

A corrosion and moisture thin film barrier can be made of $Al_2O_3$. A precursor solution was made as follows. Briefly 129 mg of $AlCl_3 (H_2O)_6$ and 20 mg of $AlNO_3 (H_2O)_3$ were dissolved in 1.1 liter of ethanol in a Teflon™ lined container that was magnetically stirred to maintain laminar flow. Two ml of Y doped $SiO_2$ in 40 ml of 2% nitric acid was added. 0.8 ml of methyl amine in methanol was slowly added to prevent gel formation. The resulting precursor solution was applied onto anodized substrates using dip coating as a corrosion protective layer and onto plastic film as a moisture barrier layer using spin coating to produce a wet layer approximately 130 nm thick. The gel formed within 90 seconds and thereafter was treated IR radiation to form a thin film having a thickness of about 40 nm. The resulting increase in effective dielectric thickness as measured by the Eddy current method was equivalent to 7 microns.

**Example 2 (reference example not according to the invention)**

Al/Zn oxide forms a transparent conductive oxide thin film. A precursor solution was made by combining 280 ml of Zn acetate $(H_2O)_2$ and 2.2 ml of aluminum nitrate $(H_2O)_9$ in 2.5 liters of ethanol and mixed as described in Example 1. 1.4 ml of ethyl amine in ethanol was added slowly to prevent gel formation. The resulting precursor solution was applied to the surface of glass using spin coating to form a wet layer about 80 nm thick. The gel was then exposed to IR radiation to form a thin film that was about 25 nm thick. Film stacks combined of 6-8 layers of AZO demonstrated > 88%T (350-850nm) and 5-10 Ohm.cm resistivity.

**Claims**

1.  A precursor solution comprising:

    a first one of a sol-gel metal precursor or a sol-gel metalloid precursor;
    a polar protic solvent,

        wherein the polar protic solvent is an organic acid; and

    an alkyl amine polar aprotic solvent,

        wherein said precursor solution forms a gel after a shear force is applied to said precursor solution, wherein relative amounts of said polar protic solvent and

    said polar aprotic solvent are selected to control gel formation in said precursor solution, and

        wherein said polar aprotic solvent is present in said precursor solution at between 1 and 25 vol%.

2.  The precursor solution of claim 1, wherein a viscosity of said precursor solution increases with increasing the shear force applied to said precursor solution.

3.  The precursor solution of claim 1, wherein a metal in said sol-gel metal precursor is selected from the group consisting of transition metals, lanthanides, actinides, alkaline earth metals, and Group IIIA through Group VA metals.

4.  The precursor solution of claim 1, wherein a metalloid in said sol-gel metalloid precursor is selected from the group consisting of boron, silicon, germanium, arsenic, antimony, tellurium, bismuth, and polonium.

5.  The precursor solution of claim 1, wherein said precursor solution comprises the sol-gel metal precursor, the sol-gel metal precursor selected from the group consisting of organometallic compounds, metallic organic salts and metallic inorganic salts.

6.  The precursor solution of claim 5, wherein said organometallic compounds comprise a metal alkoxide.

7.  The precusor solution of claim 6, wherein said metal alkoxide is selected from the group consisting of methoxides, ethoxides, propoxides butoxides, and phenoxides.

8.  The precursor solution of claim 5, wherein said metallic organic salt is selected from the group consisting of formates, acetates and propionates.

9.  The precursor solution of claim 5 wherein said metallic inorganic salt is selected from the group consisting of halide, hydroxide, nitrate, phosphate and sulfate.

10. The precursor solution of claim 1, wherein said organic acid is selected from the group consisting of formic acid, acetic acid, propionic acid, and butyric acid.

11. The precursor solution of claim 1, wherein said polar aprotic solvent is selected from the group consisting of diethylenetriamine and hexamethylenetetramine.

12. The precursor solution of claim 1, wherein the first one of said metal precursor or the metalloid precursor is an organometallic compound or an organometalloid compound comprising a polymerizable organic moiety.

13. The precursor solution of claim 1, further comprising at least one of a polymerizable organic monomer, an organic oligomer, or an organic polymer.

14. The precursor solution of claim 1, further comprising a photo-inducible polymerization catalyst.

15. The precursor solution of claim 14, wherein the photo-inducible polymerization catalyst is selected from the group consisting of titanocenes, benzophenones/amines, thioxanthones/amines, bezoinethers, acylphosphine oxides, benzilketals, acetophenones, and alkylphenones.

**Patentansprüche**

1. Eine Vorläuferlösung umfassend:

   einen ersten Sol-Gel Metallvorläufer oder Sol-Gel Metalloidvorläufer;
   ein polares protisches Lösungsmittel,

   wobei das polare protische Lösungsmittel eine organische Säure ist; und

   ein polares aprotisches Alkylamin-Lösungsmittel,

   wobei besagte Vorläuferlösung ein Gel formt nachdem eine Scherkraft auf besagte Vorläuferlösung ausgeübt wurde, wobei die relativen Mengen des besagten polaren protischen Lösungsmittels und des besagten polaren aprotischen Lösungsmittels ausgewählt sind, um die Gelbildung in besagter Vorläuferlösung zu kontrollieren, und
   wobei besagtes polares aprotisches Lösungsmittel in besagter Vorläuferlösung zu zwischen 1 und 25 vol% vorliegt.

2. Die Vorläuferlösung nach Anspruch 1, wobei eine Viskosität der besagten Vorläuferlösung mit zunehmender Scherkraft, die auf besagte Vorläuferlösung ausgeübt wird, zunimmt.

3. Die Vorläuferlösung nach Anspruch 1, wobei ein Metall in besagtem Sol-Gel Metallvorläufer ausgewählt ist aus der Gruppe bestehend aus Übergangsmetallen, Lanthaniden, Actiniden, Erdalkalimetallen, und Gruppe IIIA bis Gruppe VA Metallen.

4. Die Vorläuferlösung nach Anspruch 1, wobei ein Metalloid in besagtem Sol-Gel Metalloidvorläufer ausgewählt ist aus der Gruppe bestehend aus Bor, Silicium, Germanium, Arsen, Antimon, Tellur, Wismut, und Polonium.

5. Die Vorläuferlösung nach Anspruch 1, wobei besagte Vorläuferlösung den Sol-Gel Metallvorläufer umfasst, wobei der Sol-Gel Metallvorläufer ausgewählt ist aus der Gruppe bestehend aus organometallischen Verbindungen, metallischen organischen Salzen und metallischen anorganischen Salzen.

6. Die Vorläuferlösung nach Anspruch 5, wobei besagte organometallische Verbindungen ein Metallalkoxid umfassen.

7. Die Vorläuferlösung nach Anspruch 6, wobei besagtes Metallalkoxid ausgewählt ist aus der Gruppe bestehend aus Methoxiden, Ethoxiden, Propoxiden, Butoxiden, und Phenoxiden.

8. Die Vorläuferlösung nach Anspruch 5, wobei besagtes metallisches organisches Salz ausgewählt ist aus der Gruppe bestehend aus Formiaten, Acetaten und Propionaten.

9. Die Vorläuferlösung nach Anspruch 5, wobei besagtes metallisches anorganisches Salz ausgewählt ist aus der Gruppe bestehend aus Halogenid, Hydroxid, Nitrat, Phosphat und Sulfat.

10. Die Vorläuferlösung nach Anspruch 1, wobei besagte organische Säure ausgewählt ist aus der Gruppe bestehend aus Ameisensäure, Essigsäure, Propionsäure, und Buttersäure.

11. Die Vorläuferlösung nach Anspruch 1, wobei besagtes polares aprotisches Lösungsmittel ausgewählt ist aus der Gruppe bestehend aus Diethylentriamin und Hexamethylentetramin.

12. Die Vorläuferlösung nach Anspruch 1, wobei der erste des besagten Metallvorläufers oder Metalloidvorläufers eine organometallische Verbindung oder eine organometalloide Verbindung, die eine polymerisierbare organische Einheit umfasst, ist.

13. Die Vorläuferlösung nach Anspruch 1, die weiter mindestens ein polymerisierbares organisches Monomer, ein organisches Oligomer, oder ein organisches Polymer umfasst.

**14.** Die Vorläuferlösung nach Anspruch 1, die weiter einen photo-induzierbaren Polymerisationskatalysator umfasst.

**15.** Die Vorläuferlösung nach Anspruch 14, wobei der photo-induzierbare Polymerisationskatalysator ausgewählt ist aus der Gruppe bestehend aus Titanocenen, Benzophenonen/ Aminen, Thioxantonen/ Aminen, Bezoinethern, Acylphosphinoxiden, Benzilketalen, Acetophenonen, und Alkylphenonen.

## Revendications

**1.** - Solution de précurseur comprenant :

un premier parmi un précurseur métallique sol-gel ou un précurseur métalloïdique sol-gel ;
un solvant protique polaire,

le solvant protique polaire étant un acide organique ; et

un solvant aprotique polaire alkyl amine,

ladite solution de précurseur formant un gel après qu'une force de cisaillement soit appliquée à ladite solution de précurseur, les quantités relatives dudit solvant protique polaire et dudit solvant aprotique polaire étant choisies pour contrôler la formation de gel dans ladite solution de précurseur, et

ledit solvant aprotique polaire étant présent dans ladite solution de précurseur à raison d'entre 1 et 25 % en volume.

**2.** - Solution de précurseur selon la revendication 1, dans laquelle une viscosité de ladite solution de précurseur augmente avec l'augmentation de la force de cisaillement appliquée à ladite solution de précurseur.

**3.** - Solution de précurseur selon la revendication 1, dans laquelle un métal dans ledit précurseur métallique sol-gel est choisi dans le groupe consistant en métaux de transition, lanthanides, actinides, métaux alcalino-terreux et métaux du Groupe IIIA au Groupe VA.

**4.** - Solution de précurseur selon la revendication 1, dans laquelle un métalloïde dans ledit précurseur métalloïdique sol-gel est choisi dans le groupe consistant en bore, silicium, germanium, arsenic, antimoine, tellure, bismuth et polonium.

**5.** - Solution de précurseur selon la revendication 1, dans laquelle ladite solution de précurseur comprend le précurseur métallique sol-gel, le précurseur métallique sol-gel choisi dans le groupe consistant en composés organométalliques, sels organiques métalliques et sels inorganiques métalliques.

**6.** - Solution de précurseur selon la revendication 5, dans laquelle lesdits composés organométalliques comprennent un alcoxyde métallique.

**7.** - Solution de précurseur selon la revendication 6, dans laquelle ledit alcoxyde métallique est choisi dans le groupe consistant en méthoxydes, éthoxydes, propoxydes, butoxydes et phénoxydes.

**8.** - Solution de précurseur selon la revendication 5, dans laquelle ledit sel organique métallique est choisi dans le groupe consistant en formiates, acétates et propionates.

**9.** - Solution de précurseur selon la revendication 5, dans laquelle ledit sel inorganique métallique est choisi dans le groupe consistant en halogénure, hydroxyde, nitrate, phosphate et sulfate.

**10.** - Solution de précurseur selon la revendication 1, dans laquelle ledit acide organique est choisi dans le groupe consistant en acide formique, acide acétique, acide propionique et acide butyrique.

**11.** - Solution de précurseur selon la revendication 1, dans laquelle ledit solvant aprotique polaire est choisi dans le groupe consistant en diéthylènetriamine et hexaméthylènetétramine.

**12.** - Solution de précurseur selon la revendication 1, dans laquelle le premier dudit précurseur métallique ou du précurseur métalloïdique est un composé organométallique ou un composé organométalloïdique comprenant une fraction organique polymérisable.

**13.** - Solution de précurseur selon la revendication 1, comprenant en outre au moins l'un parmi un monomère organique polymérisable, un oligomère organique ou un polymère organique.

**14.** - Solution de précurseur selon la revendication 1, comprenant en outre un catalyseur de polymérisation photo-inductible.

**15.** - Solution de précurseur selon la revendication 14, dans laquelle le catalyseur de polymérisation photo-inductible est choisi dans le groupe consistant en titanocènes, benzophénones/amines, thioxanthones/amines, éthers de benzoïne, oxydes d'acylphosphines, benzylcétals, acétophénones et alkylphénones.

**FIGURE 1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 20040058066 A
- US 20070190361 A
- US 6403161 B

**Non-patent literature cited in the description**

- **T. W. ZERDA ; G. HOANG.** Effect of solvents on the hydrolysis reaction of tetramethyl orthosilicate. *Chemistry of Materials,* 1990, vol. 2 (4), 372-376